# EUROPEAN PATENT SPECIFICATION

(11) **EP 4 413 193 B1**
(45) Date of publication and mention of the grant of the patent: **18.03.2026**
(21) Application number: 22803181.1
(22) Date of filing: 13.10.2022
(51) Int. Cl.: D04H 1/425, D04H 1/4258, D04H 1/492, D04H 1/74, A61K 8/02, A01N 25/34, A47L 13/17

(54) **METHOD FOR MAKING A NONWOVEN MATERIAL WITH REDUCED QUATERNARY AMMONIUM AFFINITY**
VERFAHREN ZUR HERSTELLUNG EINES VLIESSTOFFES MIT REDUZIERTER QUATERNÄRER AMMONIUMAFFINITÄT
PROCÉDÉ DE FABRICATION D'UN MATÉRIAU NON TISSÉ À AFFINITÉ RÉDUITE POUR L'AMMONIUM QUATERNAIRE

(30) Priority: 07.12.2021 EP 21212717
(43) Date of publication of application: 14.08.2024
(73) Proprietor: FIBERTEX NONWOVENS A/S, 9220 Aalborg Ost (DK)
(72) Inventor: BLACK, Samuel Keith, Gray Court, SC 29645 (US); TEIXEIRA, Luis, Gray Court, SC 29645 (US); LAYER, Jonathan, Gray Court, SC 29645 (US); NICHOLSON, Jimmy, Gray Court, SC 29645 (US)
(74) Representative: Lorenz Seidler Gossel Part. mbB
(86) International application number: PCT/EP2022/078461
(87) International publication number: WO 2023/104374

(56) References cited:
- JP-A- 2019 077 966
- US-A1- 2013 039 968
- US-A1- 2016 249 606
- US-A1- 2019 053 493
- US-A1- 2020 002 858

## Description

The invention relates to a method to apply chemistry to nonwovens comprising cellulosic fibers to prevent quaternary ammonium disinfectant binding to the fibers. The invention further relates to disinfectant wipes made via such method, and use thereof.

Industrial nonwoven wipes are used for a variety of applications in industry and institutions. These products can be wet and may be soaked with chemistry for specific purposes, such as cleaning or disinfection. Wet nonwoven wipes soaked with disinfectant chemistry are known as disinfectant wipes.

Different processes are available for making nonwoven fabrics suitable for use in disinfectant wipes. Common processes use prefabricated staple fibers of certain length that are converted to form a fibrous web by methods like carding, airlaying or wet-laying. Staple fibers can be synthetic fibers or can be of natural origin. The fibrous webs are bonded to form the nonwoven fabric. A popular bonding process is spunlacing, also known as hydroentanglement, which uses fine, high pressure jets of water which penetrate the web, hit the conveyor belt and bounce back causing the fibres to entangle.

As far as the composition of the disinfectant chemistry goes, compositions comprising quaternary ammonium components ("quat") as antimicrobial actives are a popular choice. Quats are positively charged polyatomic ions of the structure NR⁺₄, R being a hydrocarbon group. Unlike the ammonium ion (NH⁺₄) and the primary, secondary, or tertiary ammonium cations, the quaternary ammonium cations are permanently charged, independent of the pH of their solution. Many quats, especially those containing long alkyl chains, are used as antimicrobials and disinfectants, show strong antimicrobial efficiency due to their bipolar nature and a consequential destroying effect on bacterial cell walls, virus envelopes, etc. that are formed from lipid bilayers.

Recently, there has been a push in the wipes industry to use cellulosic fibers, which are sustainable, recyclable and compostable, and avoid the use of plastics. Examples of suitable cellulosic fibers include viscose fibers, hemp fibres, cotton fibers and lyocell fibers.

An observed problem in cellulosic fiber based wipes soaked with a quat-based disinfectant is that quats bind to the surface of cellulosic fibers, with the consequence of a rapid decay of efficacy of the disinfectant wipe.

To resolve this issue, fiber manufacturers offer cellulosic fibers that are treated to prevent the quat binding. Treated fibers are expensive and there is a risk that the chemistry is removed by the high pressure jets during hydroentangling of the spunlace process.

Chemistry to prevent the quat binding can also be applied to the finished web, prior to applying the quat disinfectant composition, by standard textile finishing processes, like padding, foam coating, or the like. These methods generally require the fabric to be dry and the processes are performed off-line. **In** padding, for example, a dry fabric is submerged into a liquid bath and afterwards squeezed to remove excess chemistry. The textile finishing processes add a separate step in production and are consequently very unfavourable in terms of production cost and time.

US 2016/249606 A1 discloses a method of treating a web for preventing quat binding. The present invention aims to address the issues of the prior art and provide a more economical method to produce nonwoven disinfectant wet wipes, which are formed from cellulosic fiber, and contain quats as antimicrobial actives and which do not suffer from a rapid decay of efficacy of the disinfectant over time.

The present invention proposes a method for producing disinfectant wipes, wherein the disinfectant wipes comprise a nonwoven fabric formed from carded fibers that are at least in part cellulosic fibers, and wherein the nonwoven fabric is soaked with a liquid disinfectant composition comprising, as antimicrobial active, at least one quaternary ammonium component. The method comprises the following steps, that are carried out in-line on a production line for forming the nonwoven fabric: continuously forming a fibrous web from staple fibers that comprise cellulosic fibers; continuously bonding the fibrous web to form the nonwoven fabric, wherein the bonding comprises spunlacing; and continuously applying a chemistry effective to inhibit a binding of the quaternary ammonium component to the surface of the cellulosic fibers, wherein the chemistry is applied in a liquid form to the nonwoven fabric while the nonwoven fabric is still wet from spunlacing.

The invention hence involves an in-line process to apply the chemistry to the spunlace material while the nonwoven is still wet. Applying wet chemistry to a wet fabric in-line in a one-step process is a unique method to apply finish to nonwoven fabrics.

The forming of the fibrous web from the staple fibers preferably includes carding. The laydown of fibers on the conveyor of the production line preferably involves cross-laying the carded web.

The staple fibers preferably comprise between 30 wt% and 100 wt% of cellulosic fibers, wherein the remaining fibers, if any, may be synthetic fibers like polyester fibers or polyolefin, for example polypropylene or polyethylene fibers. Examples for suitable cellulosic fibers comprise viscose fibers, cotton fibers, lyocell fibers, hemp fibers, or a mixture thereof.

The method further comprises an in-line step of continuously and actively drying the fabric after the application of chemistry. Preferably, the drying comprises passing the fabric through a drying oven.

Preferably, the chemistry is applied to the nonwoven fabric via spray application. Alternatively, applying the chemistry to the wet fabric can be accomplished by foam coating, but that method is limited in terms of application speed.

The speed, at which the fibrous web / nonwoven fabric travels through the production line on the conveyor belt, can be between 100 meters per minute and 250 meters per minute. More preferably, the speed of the line is between 125 meters per minute and 200 meters per minute.

The chemistry, which inhibits binding of the quaternary ammonium component to the surface of the cellulosic fibers, is preferably a liquid suspension of solids containing cations. The liquid suspension can, for instance, include one of the following active components: modified starch such as cationic starch, aluminium acetate or other aluminium salts, sodium carbonate or other alkali or alkali earth sulphates, sulphites, acetates, carbonates, chlorides, hydroxides, phosphates or nitrates, polydiallyldimethylammonium chloride or other quaternary ammoniums such as poly(acrylamide-co-diallylmethylammonium chloride), cyanoguanidine or other ternary amines, cationic polymers such as imidazolium, pyrrolidinium or phosphonium compounds, or a combination thereof.

The solid content of the suspension in one embodiment is between 5 wt% and 30 wt%. The chemistry in its liquid form may be applied to the nonwoven fabric at an amount that equals 5 wt% to 25 wt%, comparing the weight of the chemistry to the total weight of the nonwoven.

The pH of the chemistry is preferably between 6 and 10, and more preferably between 8 and 9, and hence around neutral, which is beneficial in wipes applications for non-corrosiveness and skin tolerability.

Preferably, the added chemistry binds to the surface of the cellulosic fibers either ionically or covalently. These types of bonding avoid issues with release of the chemistry that may be undesirable for environmental and user safety considerations.

The method further comprises a step of applying the liquid disinfectant composition comprising the quaternary ammonium component to the nonwoven fabric after drying. The fabric is normally wound up to form a fabric roll after its in-line formation and drying, and subsequently unwound before applying the liquid disinfectant off-line. In another embodiment of the present invention, the liquid disinfectant may also be continuously applied in-line after drying and before wind-up.

The invention further relates to a disinfectant wipe produced by the method presented in this invention.

In the disinfectant wipe, the said nonwoven fabric is soaked with a liquid disinfectant composition comprising at least one quaternary ammonium component, and the inhibiting quat binding chemistry is applied to the nonwoven fabric as described in the context of the method above.

The disinfectant wipe according to the invention may be used for wipes applications in general, preferably for sanitary hard surface cleaning, in applications like janitory or medicinal applications.

Further details and advantages of the invention will become apparent from the examples described in the following.

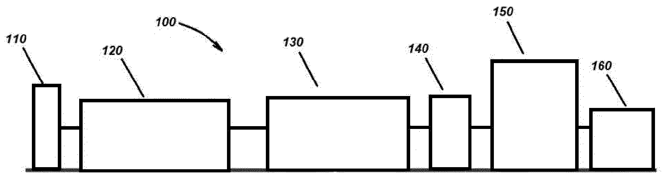

The only figure illustrates a production line 100 for making a nonwoven web in an in-line process involving carding and spunlacing, where chemistry is applied to the wet fabric in agreement with the invention.

The production line 100 comprises a number of stations subsequently arranged. The first station 110 is for fiber preparation and comprises means like a hopper feeder or the like for enabling a uniform feed of staple fibers to carding machine 120. From the carding machine 120, a perforated conveyor belt travels through the subsequent spunlacing station 130, which is followed in-line by a chemistry spray-application station 140 and a drying station 150 before the finished dried nonwoven fabric is wound up onto a roll in a winding station 160 that forms the final station of the production line 100.

The staple fibers preferably comprise between 30 wt% and 100 wt% of cellulosic fibers, such as viscose fibers, cotton fibers, lyocell fibers, hemp fibers, or a mixture thereof. Preferably, the fibers are 100 wt% cellulosic fibers. Alternatively, in order to impart certain function to the fabric, the fibers can be a mix of cellulosic fibers, e.g. 40 wt% to 70 wt% cellulosic fibers, an a remainder of synthetic fibers like polyester fibers or polyolefin fibers like polypropylene or polyethylene fibers.

The carding machine 120 and subsequent spunlacing station 130 can be configured as generally known in the art. The fibers of the fibrous web formed from the laydown in station 120 can be conveyed on a conveyor belt at high speed of, for example, between 125 meters per minute and 200 meters per minute, and be mechanically bonded by means of high energy water jets.

Next in line is the spray-application station 140, which is representative for the key step of the inventive process. The nonwoven fabric formed by spunlacing the fibrous web in station 130, while it is still wet, enters the spray-application station at unchanged travel speed. The spray application station comprises a spray system suitable to uniformly spray-apply at a rate sufficient high to apply a liquid chemistry to the fabric in an amount that equals 5 wt% to 25 wt% of the weight of the dry nonwoven fabric. The chemistry is a suspension of solids effective to inhibit a binding of the quaternary ammonium component to the surface of the cellulosic fibers. The solvent is water and the solids content of the suspension is between 5 wt% and 30 wt%. The pH of the chemistry is at 8,5.

The spray-application station 140 is followed by a drying station 150, which comprises a drying oven through which the wet chemistry loaded nonwoven fabric travels with unchanged speed for drying under elevated temperature, for example between 60°C and 110°C, and optionally under an airstream moving obliquely or perpendicularly to the direction of fabric travel.

In a final in-line step, the dried nonwoven fabric is wound up to form large rolls of many meters or even kilometres of fabric in winding station 160. The rolls can be stored in a warehouse, shipped to different locations, and unwound for further processing.

An optical Quality control system (not shown in the figure) may be installed between the drying station 150 and the winding station 160.

Off-line and outside the production line 100, the nonwoven fabric is later unwound from the large fabric rolls, soaked with a liquid disinfectant composition comprising one or more quaternary ammonium components, cut into portions appropriate for wipes, packed and shipped to customers. The disinfectant wipes so obtained may be used for sanitary hard surface cleaning.

In experimental tests an improved quat release is measured when comparing a nonwoven fabric produced via the one-step wet on wet treatment application proposed in this invention to a state of the art two-step wet on dry process.

In these tests, 50 gram per square meter nonwoven viscose samples are prepared via the method presented above. The samples are then soaked in a 0.1% alkyl(ethylbenzyl)dimethylammonium chloride solution for 13 hours. The solution is filtered and UV-vis spectroscopy is used to measure the remaining concentration of alkyl(ethylbenzyl)dimethylammonium chloride in the solution.

The positive reference is a 0.1% (=1000 ppm) alkyl(ethylbenzyl)dimethylammonium chloride solution and the negative reference is the solution taken, after incubation for 13 hours, from a 50 gram per square meter viscose nonwoven prepared without the chemical preventing quat binding. CF-2987 provided by Pulcra Chemicals, is used as the chemical preventing quat binding in the inventive and comparative tests. Inventive tests were carried out as explained above in connection with the figure. Comparative tests were carried out in a standard state of the art application on dry web. The results are summarized in Table 1 below:

**Table 1**

| Example # | Kind | Quat* remaining in solution [ppm] |
|---|---|---|
| Comparative A | Positive reference | 1000 |
| Comparative B | Negative reference | 220 |
| Comparative 1 | 23% on dry web | 960 |
| Inventive 1 | 23% on wet web | 1000 |
| Comparative 2 | 12% on dry web | 770 |
| Inventive 2 | 12% on wet web | 810 |

| | | |
|---|---|---|
| *Quat = alkyl(ethylbenzyl)dimethylammonium chloride | | |

As apparent, there is significant improvement in quat release for the inventive examples vis-à-vis the comparative examples, specifically approx. 5% in inventive example 1 vis-à-vis comparative example 1, and approx. 3.5% in inventive example 2 vis-à-vis comparative example 2.

In yet another embodiment, Stantex F QR 2981 provided by Pulcra Chemicals, is used to prevent quat binding. When applied via the one step wet on wet method described herein, a ratio of 0,05 chemistry to dry nonwoven is enough to achieve 100% quat release (= 1000 ppm residual concentration).

Without willingness to be bound by theory, the inventors believe the observed performance enhancement is due to better diffusion of the water-soluble chemistry throughout the wet web. The improved migration of the chemistry yields a better distribution and thus a more uniform layer on the cellulosic material. A more uniform layer results in a better quat release when comparing equal quantity of chemical applied. As the web is still wet from spunlacing, the chemical preventing quat binding can be applied in higher concentrations, as the water, which ensures diffusion already is present in the nonwoven.

## Claims

1. A method for producing disinfectant wipes, wherein the disinfectant wipes comprise a nonwoven fabric formed from carded fibers that are at least in part cellulosic fibers, and wherein the nonwoven fabric is soaked with a liquid disinfectant composition comprising, as antimicrobial active, at least one quaternary ammonium component, the method comprising the following steps, that are carried out in-line on a production line for forming the nonwoven fabric:
continuously forming a fibrous web from staple fibers that comprise cellulosic fibers; and
continuously bonding the fibrous web to form the nonwoven fabric, wherein the bonding comprises spunlacing;
**characterized in that**
the method further comprising the following in-line steps:
continuously applying a chemistry effective to inhibit a binding of the quaternary ammonium component to the surface of the cellulosic fibers, wherein the chemistry is applied in a liquid form to the nonwoven fabric while the nonwoven fabric is still wet from spunlacing; and
continuously drying the fabric after the application of chemistry; and
the method further comprises a step of:
applying the liquid disinfectant composition comprising the quaternary ammonium component to the nonwoven fabric after the drying.

2. The method of claim 1, wherein the forming of the fibrous web from the staple fibers includes carding.

3. The method of any preceding claim, wherein the staple fibers comprise between 30 wt% and 100 wt% of cellulosic fibers, wherein the cellulosic fibers are viscose fibers, cotton fibers, lyocell fibers, hemp fibers, or a mixture thereof, and wherein the remaining fibers, if any, are preferably synthetic fibers like polyester fibers or polyolefin.

4. The method of any preceding claim, wherein the drying comprises passing the fabric through a drying oven.

5. The method of any preceding claim, wherein the chemistry is applied to the nonwoven fabric via spray application, wherein preferably a rotary spray system is used for the in-line spray-application of chemistry.

6. The method of any preceding claim, wherein the nonwoven fabric travels through the production line, at least during the in-line application of chemistry, at a speed of between 100 meters per minute and 250 meters per minute.

7. The method of any preceding claim, wherein the chemistry in its liquid form is a suspension of solids effective to inhibit a binding of the quaternary ammonium component to the surface of the cellulosic fibers, wherein the solid content of the suspension is preferably between 5 wt% and 30 wt%.

8. The method of claim 7, wherein solids include one of the following active components: modified starch such as cationic starch, aluminium acetate or other aluminium salts, sodium carbonate or other alkali or alkali earth sulphates, sulphites, acetates, carbonates, chlorides, hydroxides, phosphates or nitrates, polydiallyldimethylammonium chloride or other quaternary ammoniums such as poly(acrylamide-co-diallylmethylammonium chloride), cyanoguanidine or other ternary amines, cationic polymers such as imidazolium, pyrrolidinium or phosphonium compounds, or a combination thereof.

9. The method of any preceding claim, wherein the chemistry in its liquid form is applied to the nonwoven fabric at an amount that equals 5 wt% to 25 wt% of the dry nonwoven fabric.

10. The method of any preceding claim, wherein the chemistry in its liquid form has a pH value of between 6 and 10, preferably between 8 and 9.

11. The method of any preceding claim, wherein the fabric is wound up to form a fabric roll after the drying and subsequently unwound from the fabric roll before applying the liquid disinfectant off-line.

12. A disinfectant wipe produced by a method according to any one of claims 1 to 11.

13. Use of a disinfectant wipe according to claim 12 as a wipe for sanitary hard surface cleaning, in particular for janitory or medicinal applications.

## Patentansprüche

1. Verfahren zur Herstellung von Desinfektionstüchern, wobei die Desinfektionstücher ein Vliesmaterial umfassen, das aus kardierten Fasern gebildet ist, die zumindest teilweise Cellulosefasern sind, und wobei das Vliesmaterial mit einer flüssigen Desinfektionsmittelzusammensetzung getränkt ist, die als antimikrobiellen Wirkstoff mindestens eine quaternäre Ammoniumkomponente umfasst, wobei das Verfahren die folgenden Schritte umfasst, die in einer Produktionslinie zur Bildung des Vliesmaterials nacheinander durchgeführt werden:
kontinuierliches Bilden eines Fasergebildes aus Stapelfasern, die Cellulosefasern umfassen; und
kontinuierliches Verbinden des Fasergebildes, um das Vliesmaterial zu bilden, wobei das Verbinden ein Wasserstrahlverfestigen umfasst;
**dadurch gekennzeichnet, dass**
das Verfahren ferner die folgenden Inline-Schritte umfasst:
kontinuierliches Aufbringen einer Chemikalie, die wirksam ist, um eine Bindung der quaternären Ammoniumkomponente an die Oberfläche der Cellulosefasern zu hemmen, wobei die Chemikalie in flüssiger Form auf das Vliesmaterial aufgebracht wird, während das Vliesmaterial noch vom Wasserstrahlverfestigen feucht ist; und
kontinuierlichen Trocknen des Vliesmaterials nach dem Aufbringen der Chemikalien; und wobei das Verfahren ferner den Schritt umfasst:
Aufbringen der flüssigen Desinfektionsmittelzusammensetzung, die die quaternäre Ammoniumkomponente umfasst, auf das Vliesmaterial nach dem Trocknen.

2. Verfahren nach Anspruch 1, wobei das Bilden der Faserbahn aus den Stapelfasern das Kardieren umfasst.

3. Verfahren nach einem der vorstehenden Ansprüche, wobei die Stapelfasern zwischen 30 Gew.-% und 100 Gew.-% Cellulosefasern umfassen, wobei die Cellulosefasern Viskosefasern, Baumwollfasern, Lyocellfasern, Hanffasern oder eine Mischung davon sind und wobei die verbleibenden Fasern, falls vorhanden, vorzugsweise synthetische Fasern wie Polyesterfasern oder Polyolefine sind.

4. Verfahren nach einem der vorstehenden Ansprüche, wobei das Trocknen das Durchlaufen des Vliesmaterials durch einen Trockenofen umfasst.

5. Verfahren nach einem der vorstehenden Ansprüche, wobei die Chemikalie durch Sprühen auf das Vliesmaterial aufgebracht wird, wobei vorzugsweise ein Rotationssprühsystem für das Inline-Sprühen der Chemikalie verwendet wird.

6. Verfahren nach einem der vorstehenden Ansprüche, wobei das Vliesmaterial zumindest während der Inline-Aufbringung der Chemikalien mit einer Geschwindigkeit zwischen 100 Metern pro Minute und 250 Metern pro Minute durch die Produktionslinie läuft.

7. Verfahren nach einem der vorstehenden Ansprüche, wobei die Chemikalie in ihrer flüssigen Form eine Suspension von Feststoffen ist, die eine Bindung der quaternären Ammoniumkomponente an die Oberfläche der Cellulosefasern wirksam hemmt, wobei der Feststoffgehalt der Suspension vorzugsweise zwischen 5 Gew.-% und 30 Gew.-% liegt.

8. Verfahren nach Anspruch 7, wobei die Feststoffe eine der folgenden aktiven Komponenten enthalten: modifizierte Stärke wie kationische Stärke, Aluminiumacetat oder andere Aluminiumsalze, Natriumcarbonat oder andere Alkali- oder Erdalkalisulfate, Sulfite, Acetate, Carbonate, Chloride, Hydroxide, Phosphate oder Nitrate, Polydiallyldimethylammoniumchlorid oder andere quaternäre Ammoniumverbindungen wie Poly(acrylamid-co-diallylmethylammoniumchlorid), Cyanoguanidin oder andere ternäre Amine, kationische Polymere wie Imidazolium-, Pyrrolidinium- oder Phosphoniumverbindungen oder eine Kombination davon.

9. Verfahren nach einem der vorstehenden Ansprüche, wobei die Chemikalie in flüssiger Form in einer Menge auf das Vliesmaterial aufgebracht wird, die 5 Gew.-% bis 25 Gew.-% des trockenen Vliesmaterials entspricht.

10. Verfahren nach einem der vorstehenden Ansprüche, wobei die Chemikalie in ihrer flüssigen Form einen pH-Wert zwischen 6 und 10, vorzugsweise zwischen 8 und 9, aufweist.

11. Verfahren nach einem der vorstehenden Ansprüche, wobei das Vliesmaterial nach dem Trocknen zu einer Materialrolle aufgewickelt und anschließend vor dem Aufbringen der flüssigen Desinfektionsmittelzusammensetzung offline von der Materialrolle abgewickelt wird.

12. Desinfektionstuch, hergestellt durch ein Verfahren gemäß einem der Ansprüche 1 bis 11.

13. Verwendung eines Desinfektionstuchs gemäß Anspruch 12 als Wischtuch zur hygienischen Reinigung harter Oberflächen, insbesondere für Reinigungs- oder medizinische Anwendungen.

## Revendications

1. Procédé de fabrication de lingettes désinfectantes, dans lequel les lingettes désinfectantes comprennent un non-tissé formé de fibres cardées comprenant au moins en partie des fibres cellulosiques, et dans lequel le non-tissé est imprégné d'une composition désinfectante liquide comprenant, en tant qu'agent antimicrobien actif, au moins un composé d'ammonium quaternaire, le procédé comprenant les étapes suivantes, réalisées en ligne sur une ligne de production destinée à la formation du non-tissé :
formation continue d'une nappe fibreuse à partir de fibres discontinues comprenant des fibres cellulosiques ; et
liaison continue de la nappe fibreuse afin de former le non-tissé, la liaison comprenant un hydroliage (spunlacing) ;
**caractérisé en ce que**
le procédé comprend en outre les étapes en ligne suivantes :
application continue d'une chimie efficace pour inhiber la liaison du composé d'ammonium quaternaire à la surface des fibres cellulosiques, ladite chimie étant appliquée sous forme liquide sur le non-tissé alors que celui-ci est encore humide à la suite de l'hydroliage ; et
séchage continu du non-tissé après l'application de la chimie ;
et **en ce que** le procédé comprend en outre une étape consistant à :
appliquer la composition désinfectante liquide comprenant le composé d'ammonium quaternaire sur le non-tissé après le séchage.

2. Procédé selon la revendication 1, dans lequel la formation de la nappe fibreuse à partir des fibres discontinues comprend le cardage.

3. Procédé selon l'une quelconque des revendications précédentes, dans lequel les fibres discontinues comprennent entre 30 % en poids et 100 % en poids de fibres cellulosiques, les fibres cellulosiques étant des fibres de viscose, des fibres de coton, des fibres de lyocell, des fibres de chanvre, ou un mélange de celles-ci, et dans lequel les fibres restantes, le cas échéant, sont de préférence des fibres synthétiques telles que des fibres de polyester ou de polyoléfine.

4. Procédé selon l'une quelconque des revendications précédentes, dans lequel le séchage comprend le passage du non-tissé dans un four de séchage.

5. Procédé selon l'une quelconque des revendications précédentes, dans lequel la chimie est appliquée au non-tissé par pulvérisation, de préférence au moyen d'un système de pulvérisation rotatif utilisé pour l'application en ligne de la chimie.

6. Procédé selon l'une quelconque des revendications précédentes, dans lequel le non-tissé se déplace dans la ligne de production, au moins pendant l'application en ligne de la chimie, à une vitesse comprise entre 100 mètres par minute et 250 mètres par minute.

7. Procédé selon l'une quelconque des revendications précédentes, dans lequel la chimie sous forme liquide est une suspension de solides efficace pour inhiber la liaison du composé d'ammonium quaternaire à la surface des fibres cellulosiques, la teneur en solides de la suspension étant de préférence comprise entre 5 % en poids et 30 % en poids.

8. Procédé selon la revendication 7, dans lequel les solides comprennent l'un des composants actifs suivants : amidon modifié tel qu'un amidon cationique, acétate d'aluminium ou autres sels d'aluminium, carbonate de sodium ou autres sulfates, sulfites, acétates, carbonates, chlorures, hydroxydes, phosphates ou nitrates d'alcalis ou de métaux alcalino-terreux, chlorure de polydiallyldiméthylammonium ou autres ammoniums quaternaires tels que le poly(acrylamide-co-chlorure de diallylméthylammonium), cyanoguanidine ou autres amines tertiaires, polymères cationiques tels que des composés imidazolium, pyrrolidinium ou phosphonium, ou une combinaison de ceux-ci.

9. Procédé selon l'une quelconque des revendications précédentes, dans lequel la chimie sous forme liquide est appliquée au non-tissé à une quantité correspondant à 5 % en poids à 25 % en poids du non-tissé sec.

10. Procédé selon l'une quelconque des revendications précédentes, dans lequel la chimie sous forme liquide présente une valeur de pH comprise entre 6 et 10, de préférence entre 8 et 9.

11. Procédé selon l'une quelconque des revendications précédentes, dans lequel le non-tissé est enroulé pour former un rouleau de non-tissé après le séchage, puis déroulé à partir dudit rouleau avant l'application hors ligne de la composition désinfectante liquide.

12. Lingette désinfectante obtenue par un procédé selon l'une quelconque des revendications 1 à 11.

13. Utilisation d'une lingette désinfectante selon la revendication 12 en tant que lingette destinée au nettoyage sanitaire de surfaces dures, en particulier pour des applications de conciergerie ou médicales.
